# EUROPÄISCHE PATENTSCHRIFT

(11) **EP 3 552 873 B1**
(45) Veröffentlichungstag und Bekanntmachung des Hinweises auf die Patenterteilung: **05.08.2020**
(21) Anmeldenummer: 19165067.0
(22) Anmeldetag: 26.03.2019
(51) Int. Cl.: B60N 2/75, B60N 2/10, B60N 2/22

(54) **FAHRZEUGSITZ MIT GEMEINSAM VERSTELLBAREN SCHALTKONSOLEN**
VEHICLE SEAT WITH SWITCHING BRACKETS ADJUSTABLE TOGETHER
SIÈGE DE VÉHICULE POURVU DE CONSOLES DE COMMANDE DES VITESSES RÉGLABLES CONJOINTEMENT

(30) Priorität: 13.04.2018 DE 102018108792; 13.04.2018 DE 102018108795
(43) Veröffentlichungstag der Anmeldung: 16.10.2019
(73) Patentinhaber: Grammer AG, 92224 Amberg (DE)
(72) Erfinder: Haller, Thomas, 92289 Ursensollen (DE)
(74) Vertreter: Hannke, Christian

(56) Entgegenhaltungen:
- EP-A1- 0 086 523
- CA-A1- 2 297 997
- DE-A1-102005 022 838

## Beschreibung

Die Erfindung betrifft einen Fahrzeugsitz für ein Fahrzeug gemäß dem Oberbegriff des Patentanspruchs 1. Ein solcher Fahrzeugsitz ist aus DE-A-10 2005 022 838 bekannt.

Derartige Fahrzeugsitze umfassen generell ein Sitzteil mit einem Sitzteilrahmen und ein Rückenlehnenteil.

Außerdem umfassen derartige Fahrzeugsitze mindestens ein, bevorzugt zwei Schaltkonsolenelemente, wobei eines der Schaltkonsolenelemente an einer linken und eines an einer rechten Seite des Sitzteils angeordnet sind. Ein derartiges Schaltkonsolenelement umfasst mindestens ein Steuerelement zur Ansteuerung mindestens einer Funktion mindestens eines Aktorelements des Fahrzeugs. Beispielsweise ist das Steuerelement als Handhebel oder Steuerknüppel ("Joystick") ausgestaltet. Beispielsweise wird mittels des Steuerelements eine Bewegung einer Baggerschaufel eines als Bagger ausgestalteten Fahrzeugs oder der Gabel eines als Gabelstapler ausgestalteten Fahrzeugs angesteuert.

Damit die Bedürfnisse unterschiedlicher Fahrer mit unterschiedlichem Körperbau erfüllt werden können, ist oft das Sitzteil und/ oder das Rückenlehnenteil hinsichtlich eines Neigungsgrades verstellbar ausgebildet. Zusätzlich ist oft eine Verstellung zumindest des Sitzteils in Längsrichtung des Fahrzeugsitzes möglich.

Umfasst nun der Fahrzeugsitz zwei Schaltkonsolenelemente, so müssen oft beide separat an die jeweiligen Bedürfnisse angepasst werden.

Aufgabe der vorliegenden Erfindung ist es daher, einen Fahrzeugsitz zur Verfügung zu stellen, bei welchem beide Schaltkonsolenelemente zumindest abschnittsweise kombiniert miteinander verstellbar sind, um in allen denkbaren Positionen bzw. Neigungsgraden des Rückenlehnenteils und des Sitzteils sowie für alle potentiellen Fahrer gut erreichbar zu sein.

Die Aufgabe der Erfindung wird gelöst von einem Fahrzeugsitz für ein Fahrzeug mit einem Sitzteil, umfassend einen Sitzteilrahmen, mit einem Rückenlehnenteil und mit einem ersten und einem zweiten Schaltkonsolenelement, welche jeweils mindestens ein Steuerelement zur Ansteuerung mindestens einer Funktion eines Aktorelements des Fahrzeugs umfassen, wobei das erste Schaltkonsolenelement auf einer ersten Seite des Sitzteils und das zweite Schaltkonsolenelement auf einer zweiten Seite des Sitzteils sich in Längsrichtung des Fahrzeugsitzes erstreckend angeordnet sind, wobei das Sitzteil und/ oder das Rückenlehnenteil hinsichtlich eines Neigungsgrades verstellbar ausgebildet ist, wobei eine Veränderung einer Relativposition eines ersten Abschnitts des ersten Schaltkonsolenelements gegenüber dem Fahrzeugsitz durchführbar ist, wobei mittels eines Übertragungssystems, welches frei von elektronischen Komponenten ist, die Veränderung der Relativposition des ersten Abschnitts des ersten Schaltkonsolenelements in eine Veränderung einer Relativposition eines ersten Abschnitts des zweiten Schaltkonsolenelements gegenüber dem Fahrzeugsitz übertragbar ist.

Im Sinne der vorliegenden Erfindung wird unter dem Begriff "frei von elektronischen Komponenten" verstanden, dass das jeweilige Element, in diesem Falle das Übertragungssystem, ohne jegliche Komponente ausgestaltet ist, die ein Fachmann als Elektronikkomponente ansehen würde; insbesondere sind solche Elektronikkomponenten beispielsweise als Sensoren, Kontakte, Steuerungen, Schalter, Relais, Dioden, Lichtschranken etc. ausgebildet.

Es ist vorteilhaft, wenn die Veränderung der Relativposition des ersten Abschnitts des ersten Schaltkonsolenelements gegenüber dem Fahrzeugsitz in Längsrichtung des Fahrzeugsitzes durchführbar ist. So lassen sich beispielsweise zumindest das erste Schaltkonsolenelement und damit das ihm zugeordnete Steuerhebelelement nach vorne oder nach hinten schieben und auf den Körperbau beziehungsweise die Armlänge unterschiedlicher Fahrer einstellen. Denkbar ist jedoch auch, dass die Veränderung der Relativposition des ersten Abschnitts des ersten Schaltkonsolenelements gegenüber dem Fahrzeugsitz in Höhen- oder Breitenrichtung des Fahrzeugsitzes durchführbar ist. Denkbar ist auch, dass die Veränderung der Relativposition des ersten Abschnitts des ersten Schaltkonsolenelements gegenüber dem Fahrzeugsitz so durchführbar ist, dass ein Vektor einer Verschiebebewegung, welche die Veränderung der Relativposition darstellt, in Längs-, Höhen- und/ oder Breitenrichtung des Fahrzeugsitzes orientiert ist.

Als besonders bevorzugt hat es sich herausgestellt, wenn die Veränderung der Relativposition des ersten Abschnitts des ersten Schaltkonsolenelements synchron zur Veränderung der Relativposition des ersten Abschnitts des zweiten Schaltkonsolenelements durchführbar ist.

Mit anderen Worten genügt es, wenn eines der Schaltkonsolenelemente in die gewünschte Position bewegt wird, da die Position des anderen Schaltkonsolenelements synchron dazu über das Übertragungssystem ebenfalls in eine gewünschte Position angeglichen wird.

Im Sinne der vorliegenden Erfindung wird unter dem Begriff "synchron" beispielsweise verstanden, dass die Veränderungen der Relativpositionen des ersten und des zweiten Schaltkonsolenelements zeitgleich oder im Wesentlichen zeitgleich durchführbar sind. Insbesondere wird jedoch unter dem Begriff "synchron" verstanden, dass die Veränderungen der Relativpositionen der ersten Abschnitte des ersten und des zweiten Schaltkonsolenelements in eine gleiche oder in Bezug auf eine Fahrzeugsitzreferenz analoge Relativposition der ersten Abschnitte des ersten und des zweiten Schaltkonsolenelements resultieren.

Damit kann nämlich insbesondere mittels der Veränderung der Relativposition des ersten Abschnitts des ersten Schaltkonsolenelements die Relativposition des ersten Abschnitts des ersten Schaltkonsolenelements gegenüber dem Fahrzeugsitz in Bezug auf eine in Längsrichtung und Höhenrichtung des Fahrzeugsitzes verlaufende Bezugsebene spiegelsymmetrisch zur Relativposition des ersten Abschnitts des zweiten Schaltkonsolenelements ausgestaltet sein.

Bevorzugt gelten die obigen Ausführungen natürlich dann, wenn beide Schaltkonsolenelemente von einer in Bezug auf die Fahrzeugsitzreferenz gleichen Basis-Relativposition (Grundstellung, Grundposition) aus bewegt werden.

Bevorzugt ist es ferner, wenn das erste und das zweite Schaltkonsolenelement jeweils einen unmittelbar und starr mit dem Sitzteilrahmen verbundenen zweiten Abschnitt aufweisen, gegenüber welchem der erste Abschnitt jeweils zumindest in Längsrichtung des Fahrzeugsitzes verschiebbar ausgebildet ist, um die Veränderung der Relativposition der ersten Abschnitte auszugestalten.

Bevorzugt ist das Schaltkonsolenelement am Sitzteilrahmen seitlich des Sitzteils montiert, wobei ein erster Abschnitt des Schaltkonsolenelements zumindest in Längsrichtung des Fahrzeugsitzes verschiebbar ausgebildet ist.

Das Schaltkonsolenelement folgt also durch die Verbindung mit dem Sitzteilrahmen bevorzugt einer Bewegung und/ oder einer Verschwenkung des Sitzteils. Gleichzeitig ist ein erster Abschnitt des Schaltkonsolenelements hinsichtlich seiner Relativposition in Längsrichtung des Fahrzeugsitzes einstellbar und somit stets gut erreichbar.

Es ist denkbar, dass der Fahrzeugsitz weiterhin mindestens eine Armlehne umfasst. In diesem Fall ist es bevorzugt, dass das Steuerkonsolenelement unabhängig von der mindestens einen Armlehne ausgebildet ist. Unabhängig ausgebildet heißt beispielsweise, dass das Steuerkonsolenelement keinerlei mechanische Wechselwirkung mit der Armlehne ausbildet. Unabhängig ausgebildet heißt ferner beispielsweise, dass eine Bewegung (Verschiebung und/ oder Verschwenkung) des Steuerkonsolenelements unabhängig von einer Bewegung (Verschiebung und/ oder Verschwenkung) der Armlehne durchführbar ist; bevorzugt gilt dies auch oder nur umgekehrt.

Um bei der Montage des Schaltkonsolenelements am Fahrzeugsitz vorhandene Elemente optimal auszunutzen, ist es bevorzugt, dass das Schaltkonsolenelement einen unmittelbar und starr mit dem Sitzteilrahmen verbundenen zweiten Abschnitt aufweist, gegenüber welchem der erste Abschnitt zumindest in Längsrichtung des Fahrzeugsitzes mittels einer Verschiebebewegung verschiebbar ausgebildet ist.

Es ist also bevorzugt, dass das gesamte Schaltkonsolenelement durch die starre Verbindung seines zweiten Abschnitts mit dem Sitzteilrahmen stets der Verschwenkung des Sitzteils folgt.

Um die Verschiebebewegung zwischen dem ersten Abschnitt und dem zweiten Abschnitt des Schaltkonsolenelements möglichst sicher und reibungsarm zu gestalten, ist es bevorzugt, dass der zweite Abschnitt des Schaltkonsolenelements ein Führungsschienenelement und der erste Abschnitt des Schaltkonsolenelements ein zum Führungsschienenelement mittels der Verschiebebewegung relativbewegliches Schlittenelement umfasst. Es ist möglich, dass das Führungsschienenelement und das Schlittenelement zueinander gleit- und/ oder wälzgelagert sind.

Bevorzugt sind das Führungsschienenelement und das Schlittenelement hinsichtlich ihrer Längsausdehnung sich in Längs- und/ oder Höhenrichtung des Fahrzeugsitzes erstreckend angeordnet. Weiter bevorzugt sind das Führungsschienenelement und das Schlittenelement hinsichtlich ihrer Längsausdehnung jeweils parallel zur Längsrichtung des Fahrzeugsitzes angeordnet.

Um die starre Verbindung zwischen dem Sitzteilrahmen und dem zweiten Abschnitt des Schaltkonsolenelements auszubilden, hat es sich als vorteilhaft herausgestellt, wenn der zweite Abschnitt des Schaltkonsolenelements Abstandsbolzen umfasst, welche jeweils mit einem ersten Ende starr mit dem Sitzteilrahmen und mit einem zweiten Ende lösbar mit dem Führungsschienenelement verbunden sind.

Es können beispielsweise an diesem Sitzunterbau mindestens zwei, bevorzugt drei Abstandsbolzen verschweißt sein. Um eine plane Auflagefläche des Führungsschienenelements an allen drei Abstandsbolzen zu garantieren, können diese Abstandsbolzen vor dem Verschweißen auf einer Montageplatte befestigt sein. Im Anschluss daran kann das Führungsschienenelement auf die Abstandsbolzen gesteckt und beispielsweise mittels je einer Bundmutter befestigt werden.

Am Schlittenelement können beispielsweise je zwei Halter für Steuerhebelträger montiert werden, an welchen die Steuerhebelträger montiert werden.

Um die Verschiebebewegung des Schlittenelements gegenüber dem Führungsschienenelement begrenzen zu können, ist es vorteilhaft, wenn an einem ersten und einem zweiten Ende des Führungsschienenelements jeweils ein mechanisches Anschlagelement angeordnet ist, welches dafür vorgesehen ist, bei der Verschiebebewegung des Schlittenelements gegenüber dem Führungsschienenelement mit dem Schlittenelement eine mechanische Wechselwirkung auszubilden.

Bevorzugt ist das Anschlagelement lösbar mit dem ersten und dem zweiten Ende des Führungsschienenelements verbunden. Bevorzugt sind zur Anordnung des Anschlagelements, welches beispielsweise als Schraube ausgestaltet ist, am ersten und am zweiten Ende des Führungsschienenelements jeweils mindestens zwei Verbindungselemente, welche insbesondere in Form von Aufnahmebohrungen ausgestaltet sind, angeordnet. Denkbar wäre auch, dass Verbindungselemente über die gesamte Länge des Führungsschienenelements angeordnet sind, bevorzugt in regelmäßigen Abständen von beispielsweise 10 mm zueinander.

Gemäß einem besonders bevorzugten Ausführungsbeispiel ist es vorgesehen, dass der erste Abschnitt des Schaltkonsolenelements einen in Sitzbreitenrichtung innen liegenden Anteil, an welchem eine erste Welle gelagert ist, und einen um die erste Welle verschwenkbaren in Sitzbreitenrichtung außen liegenden Anteil aufweist. Insbesondere ist also der außen liegende Anteil des ersten Abschnitts des Schaltkonsolenelements hinsichtlich eines Neigungsgrades verstellbar, bevorzugt hinsichtlich eines Neigungsgrades um die Sitzbreitenrichtung. Dem Fachmann ist bewusst, dass mittels der beschriebenen Lagerung mit der Verschwenkung um die erste Welle nicht nur eine Änderung des Neigungsgrades des außen liegenden Anteils, sondern auch eine Änderung der Position des außen liegenden Anteils in Höhenrichtung des Fahrzeugsitzes einhergeht.

Der Neigungsgrad des zweiten Abschnitts des Schaltkonsolenelements sowie des innen liegenden Anteils des ersten Abschnitts ist also bevorzugt lediglich von einem Neigungsgrad des Sitzteils abhängig. Der Neigungsgrad des außen liegenden Anteils des ersten Abschnitts des Schaltkonsolenelements ist dagegen bevorzugt zum einen vom Neigungsgrad des Sitzteils und zum anderen von einem Verschwenkungsgrad des außen liegenden Anteils um den innen liegenden Anteil abhängig. Somit ist bevorzugt eine Grobjustierung des Neigungsgrades des außen liegenden Anteils über den Neigungsgrad des Sitzteils sowie eine Feinjustierung über den Verschwenkungsgrad des außen liegenden Anteils um den innen liegenden Anteil möglich.

Die Längsposition des zweiten Abschnitts des Schaltkonsolenelements ist ferner bevorzugt lediglich von einer Längsposition des Sitzteils abhängig. Die Längsposition des ersten Abschnitts des Schaltkonsolenelements ist dagegen bevorzugt zum einen von der Längsposition des Sitzteils und zum anderen von einem Grad der Verschiebung des ersten Abschnitts gegenüber dem zweiten Abschnitt des Schaltkonsolenelements abhängig.

Besonders bevorzugt ist eine Mittelachse der ersten Welle parallel zur Sitzbreitenrichtung angeordnet. Weiterhin bevorzugt ist die erste Welle an einem hinteren Ende des Schaltkonsolenelements angeordnet, so dass insbesondere von allen Kompartimenten des außen liegenden Anteils des ersten Abschnitts des Schaltkonsolenelements ein vorderes Kompartiment während der Verschwenkbewegung um die erste Welle eine größtmögliche Änderung des Neigungsgrades erfährt. Damit ist es möglich, bereits mit einer Verschwenkung um einen geringen Winkel eine große Neigungs- und Höhenverstellung des vorderen Kompartiments zu erzielen.

An dem außen liegenden Anteil und bevorzugt an dem vorderen Kompartiment ist vorteilhaft das Steuerelement angeordnet, so dass dieses ebenfalls die größtmögliche Änderung des Neigungsgrades erfährt und sich also besonders schnell auf die gewünschte Neigung und damit auch auf die gewünschte Höhe einstellen lässt. Ebenfalls lässt sich der Neigungsgrad über die oben erwähnte Grob- und Feinjustierung relativ genau einstellen.

Besonders bevorzugt ist am vorderen Ende des Schaltkonsolenelements eine zweite Welle als Teil der Lagerung des vorderen Endes des Schaltkonsolenelements angeordnet. Beispielsweise ist eine Mittelachse der zweiten Welle parallel zur Sitzbreitenrichtung angeordnet.

Besonders bevorzugt ist am vorderen Ende des Schaltkonsolenelements ein Halteelement angeordnet, welches eine Haltekraft bereitstellt, mittels welcher das Schaltkonsolenelement hinsichtlich einer Verschwenkung um die erste Welle in Position haltbar ist. Dieses Halteelement ist insbesondere als Gasdruckfederelement ausgestaltet und/ oder mit der zweiten Welle verbunden. Eine Verschwenkung des Schaltkonsolenelements um die erste Welle erfolgt also bevorzugt manuell und/ oder in Richtung oder entgegen der Haltekraft des Halteelements.

Es ist bevorzugt, dass die erste und/ oder die zweite Welle gegenüber dem in Sitzbreitenrichtung innen liegenden Anteil keinen Freiheitsgrad in radialer und/ oder axialer Richtung aufweisen. Beispielsweise ist der radiale Freiheitsgrad gesperrt, indem eine Klemmschraube senkrecht zur Mittelachse der ersten und/ oder zweiten Welle am innen liegenden Anteil angeordnet ist, deren Schaft mittels seiner Stirnfläche radial außen an der ersten und/ oder der zweiten Welle anliegt und somit die Drehung der jeweiligen Welle um ihre Mittelachse sperrt. Beispielsweise ist der axiale Freiheitsgrad durch die Verwendung zweier Außensicherungsringe, welche auf einem Außendurchmesser der jeweiligen Welle und zu beiden Seiten des in Sitzbreitenrichtung außen liegenden Anteil angeordnet sind, gesperrt.

Ebenfalls bevorzugt ist die Verschiebebewegung des Schlittenelements gegenüber dem Führungsschienenelement sperrbar; insbesondere ist also nach erfolgter Verschiebung in Längsrichtung die gewünschte Relativposition des Schlittenelements gegenüber dem Führungsschienenelement arretierbar. Dazu ist es vorteilhaft, wenn am Führungsschienenelement ein mechanisches Sicherungselement angeordnet ist, welches in Eingriff mit dem Schlittenelement bringbar ist und dazu ausgebildet ist, die Verschiebebewegung des Schlittenelements gegenüber dem Führungsschienenelement zu sperren.

Beispielsweise ist dieses Sicherungselement als Rastbolzenelement ausgestaltet. Dieses ist beispielsweise in Bezug auf seine Mittelachse senkrecht zum Führungsschienenelement in einer zu ihm komplementären Aussparung angeordnet. Das Rastbolzenelement weist bevorzugt ein äußeres Hülsenelement auf, welches gegenüber dem Führungsschienenelement zumindest keine translatorischen Freiheitsgrade aufweist, mit anderen Worten ist es also, bevorzugt in Richtung der Mittelachse des Rastbolzenelements, nicht verschieblich gegenüber dem Führungsschienenelement angeordnet. Innerhalb des äußeren Hülsenelements ist ein Rastbolzen in Richtung der Mittelachse des Rastbolzenelements verschieblich gelagert.

Während das äußere Hülsenelement bevorzugt keine mechanische Wechselwirkung mit dem Schlittenelement aufweist, ist bevorzugt mittels einer Verschiebung des Rastbolzens in Richtung der Mittelachse des Rastbolzenelements hin zum Schlittenelement eine mechanische Wechselwirkung zwischen dem Rastbolzen und dem Schlittenelement ausbildbar. Bevorzugt ist der Rastbolzen in eine von mindestens zwei Bohrungen am Schlittenelement einführbar. Besonders bevorzugt sind die mindestens zwei Bohrungen in Längsrichtung des Schlittenelements angeordnet. Wenn es mehr als zwei Bohrungen sind, sind zwei benachbarte Bohrungen bevorzugt jeweils identisch zueinander beabstandet.

Eine Verschiebung des Rastbolzens innerhalb des Hülsenelements ist bevorzugt ausbildbar, indem ein dem Schlittenelement abgewandtes Ende des Rastbolzens mit einem weiteren, auf Zug und Druck belastbaren Bowdenzugelement verbunden ist. Ferner ist bevorzugt ein mittels eines Benutzers des Fahrzeugsitzes bedienbarer Hebel am Fahrzeugsitz angeordnet, welcher über das weitere Bowdenzugelement mit dem Rastbolzen verbunden ist.

Verschwenkt oder verschiebt der Benutzer den Hebel in eine erste Richtung, so ist eine Seele des weiteren Bowdenzugelements, welche insbesondere als ein Drahtseil ausgestaltet ist, auf Zug belastet, und der Rastbolzen gleitet aus einer Bohrung am Schlittenelement heraus. Anschließend kann die Verschiebung des Schlittenelements gegenüber dem Führungsschienenelement erfolgen.

Verschwenkt oder verschiebt der Benutzer den Hebel in eine zweite Richtung, so ist die Seele auf Druck belastet, und der Rastbolzen kann in eine andere Bohrung am Schlittenelement hineingleiten. Besonders bevorzugt ist am Hebel ein Verstellelement, beispielsweise in Form einer Stellschraube angeordnet, mittels welchem eine Vorspannung der Seele veränderbar ist.

Zusätzlich oder alternativ kann der Rastbolzen gegenüber der äußeren Hülse federgelagert sein, wobei die Kraft einer Feder der Federlagerung dazu geeignet ist, den Rastbolzen in Richtung des Schlittenelements zu bewegen.

Eine äußere Hülle des weiteren Bowdenzugelements (auch Zughülle oder Bogen genannt), innerhalb welcher die Seele des weiteren Bowdenzugelements verschieblich gelagert ist, ist vorteilhaft am Sitzunterbau befestigt, beispielsweise mittels eines Halteblechs und einer Klemmschraube, so dass die Position der äußeren Hülle gegenüber dem Sitzunterbau fest ist.

Zugunsten einer höheren Kosteneffizienz ist vorteilhaft, wenn nur das eine der Schaltkonsolenelemente mit einer eigenen Arretierungsvorrichtung versehen ist. Die Arretierung des anderen der Schaltkonsolenelemente erfolgt vorteilhaft über das Übertragungssystem.

Eine bevorzugte Ausführungsform sieht wie oben beschrieben also vor, dass die Veränderung der Relativposition der ersten Abschnitte des ersten und des zweiten Schaltkonsolenelements in Längsrichtung des Fahrzeugsitzes durchführbar ist. Um eine synchrone Bewegung beider ersten Abschnitte zu ermöglichen, sind mehrere Ausführungsformen des Übertragungssystems denkbar.

Als vorteilhaft hat sich beispielsweise eine erste Ausführungsform des Übertragungssystems herausgestellt, gemäß welcher das Übertragungssystem rein, also ausschließlich mechanisch ausgestaltet ist und ein Bowdenzugsystem ausbildet, wobei der erste Abschnitt des ersten und des zweiten Schaltkonsolenelements jeweils ein vorderes und ein hinteres Ende umfasst, wovon mindestens zwei unmittelbar mit dem Bowdenzugsystem verbunden sind.

Gemäß einer ersten Variante der ersten Ausführungsform des Übertragungssystems ist es denkbar, dass das Bowdenzugsystem einen erstes Bowdenzugelement, welches jeweils unmittelbar mit dem vorderen Ende des ersten Abschnitts des ersten Schaltkonsolenelements und mit dem hinteren Ende des ersten Abschnitts des zweiten Schaltkonsolenelements verbunden ist, und einen zweites Bowdenzugelement, welches jeweils unmittelbar mit dem vorderen Ende des ersten Abschnitts des zweiten Schaltkonsolenelements und mit dem hinteren Ende des ersten Abschnitts des ersten Schaltkonsolenelements verbunden ist, umfasst.

Es sind also zwei Bowdenzugelemente überkreuz verschaltet, so dass der eine Steuerhebelträger, wenn er nach vorne geschoben wird, den anderen mit nach vorne zieht, was eine platzsparende und leicht zu verwirklichende Art der Synchronisation darstellt.

In diesem Fall genügt es, wenn bei einer Veränderung der Relativposition des ersten Abschnitts des ersten Schaltkonsolenelements, beispielsweise bei einer Verschiebebewegung nach hinten oder nach vorne, die beiden Bowdenzugelemente mit einer reinen Zugbelastung beaufschlagbar sind. Die Auslegung der beiden Bowdenzugelemente kann also so erfolgen, dass deren eigentliches Kraftübertragungselement (Seele) als rein auf Zug beanspruchbares Element ausgestaltet ist und beispielsweise in Form eines Seils, welches kein Stahlseil sein muss, vorliegt.

Gemäß einer zweiten Variante der ersten Ausführungsform des Übertragungssystems ist es denkbar, dass das Bowdenzugsystem ein einziges auf Zug und Druck belastbares Bowdenzugelement umfasst, welches unmittelbar mit einem der vorderen Enden und unmittelbar mit einem der hinteren Enden der ersten Abschnitte der Schaltkonsolenelemente verbunden ist.

In diesem Fall muss also bei einer Veränderung der Relativposition des ersten Abschnitts des ersten Schaltkonsolenelements das einzige Bowdenzugelement in eine erste Richtung mit einer Zugbelastung und in eine zweite Richtung mit einer Druckbelastung beaufschlagbar sein. Die Auslegung des einzigen Bowdenzugelements muss also so erfolgen, dass dessen eigentliches Kraftübertragungselement (Seele) als ein auf Zug und Druck beanspruchbares Element ausgestaltet ist und beispielsweise in Form eines Stahlseils vorliegt.

Auf Zug beanspruchbar heißt, dass das jeweilige Element dazu ausgebildet ist, Zugkräfte zu übertragen. Auf Druck beanspruchbar heißt, dass das jeweilige Element dazu ausgebildet ist, Druckkräfte zu übertragen.

Je nach den vorliegenden Platzverhältnissen kann es günstiger sein, eine Lösung mit zwei Bowdenzugelementen zu realisieren, da bei einem rein auf Zug beanspruchbaren Element die bei der Verlegung oder Montage des Bowdenzugelements minimal erlaubten Biegeradien keinen allzu großen Wert aufweisen. Zudem sind die Kosten für eines der minderwertigeren Zugelemente kleiner als bei der Lösung mit nur einem Bowdenzugelement.

Eine Lösung mit nur einem Bowdenzugelement bietet dagegen den Vorteil, dass das Zugelement verschleißfester ausgestaltet ist. Zudem sind Materialeinsparungen durch den Verzicht auf ein zweites Bowdenzugelement möglich.

Für die erste und die zweite Variante der ersten Ausführungsform des Übertragungssystems ist es vorteilhaft, wenn der zweite Abschnitt des ersten und des zweiten Schaltkonsolenelements jeweils ein vorderes und ein hinteres Ende umfasst, wobei die Bowdenzugelemente jeweils eine stationäre Hülle aufweisen, welche mit jeweils zwei der vorderen und hinteren Enden der zweiten Abschnitte der ersten und des zweiten Schaltkonsolenelements verbunden ist, und wobei die Bowdenzugelemente jeweils eine bewegliche Seele aufweisen, welche mit jeweils zwei der vorderen und hinteren Enden der ersten Abschnitte des ersten und des zweiten Schaltkonsolenelements verbunden ist.

Ebenfalls als vorteilhaft hat sich beispielsweise eine zweite Ausführungsform des Übertragungssystems herausgestellt, gemäß welcher das Übertragungssystem zumindest teilweise pneumatisch und/ oder hydraulisch ausgestaltet ist und ein Zylindersystem ausbildet, wobei der erste Abschnitt des ersten Schaltkonsolenelements und der erste Abschnitt des zweiten Schaltkonsolenelements jeweils mit dem Zylindersystem verbunden sind.

Ferner ist es vorteilhaft, wenn das Zylindersystem ein erstes Zylinderelement, welches unmittelbar mit dem vorderen Ende des ersten Schaltkonsolenelements und über ein Leitelement mit dem hinteren Ende des zweiten Schaltkonsolenelements verbunden ist, und ein zweites Zylinderelement, welches unmittelbar mit dem hinteren Ende des ersten Schaltkonsolenelements und über das mindestens eine Leitelement mit dem vorderen Ende des zweiten Schaltkonsolenelements verbunden ist, umfasst. Bevorzugt dient das Leitelement zur Aufnahme und zum Führen des Hydraulik- und/ oder Pneumatikmediums.

Die Verschaltung der Zylinderelemente verläuft also wie bei den Bowdenzugelementen überkreuz. Es genügt bei der Verwendung von Zug-Druck-Zylindern ein Zylinderelement pro Schaltkonsolenelement.

Bevorzugt sind beide Zylinderelemente beispielsweise in Bezug auf ihre Mittelachse fluchtend zur Längserstreckung des ersten Abschnitts eines der Schaltkonsolenelemente angeordnet.

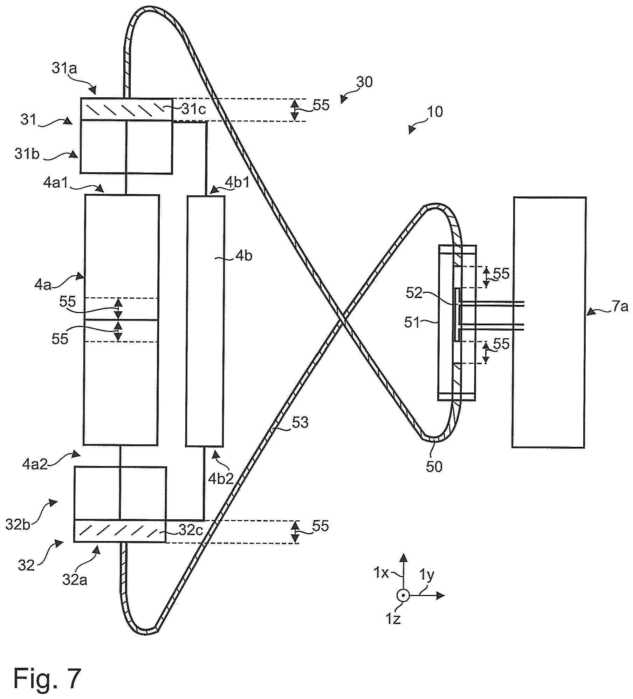

Bevorzugt ist bei Verwendung eines hydraulischen und/ oder pneumatischen Übertragungssystems hinsichtlich des verwendeten Mediums (Hydraulikmedium wie beispielsweise Öl oder Pneumatikmedium wie beispielsweise Stickstoff) ein geschlossener Kreislauf ausgebildet. So wird im Allgemeinen ein Kreislauf dann als "geschlossen" definiert, wenn die Flüssigkeit/ das Gas nicht (in einem Tank) mit Umgebungsdruck gespeichert wird, sondern z.B. in einem Speicher mit einem bestimmten Systemdruck (wie anhand der Fig. 7 unten noch näher beschrieben). Die Bewegung der Kolbenstangenanordnungen relativ zu den Gehäusen kann somit unter Ausnutzung einer Vorspannung des Mediums erfolgen, was den Energiebedarf für die Veränderung der Position des ersten Anteils der Schaltkonsolenelemente signifikant reduziert.

Es ist weiter vorteilhaft, wenn der zweite Abschnitt des ersten und des zweiten Schaltkonsolenelements jeweils ein vorderes und ein hinteres Ende umfasst, wobei die Zylinderelemente jeweils ein stationäres Gehäuse und eine zum Gehäuse relativbewegliche Kolbenstangenanordnung umfassen, wobei die stationären Gehäuse mit jeweils einem der vorderen oder hinteren Enden der zweiten Abschnitte des ersten oder des zweiten Schaltkonsolenelements, insbesondere unmittelbar, verbunden sind, und wobei die Kolbenstangenanordnungen mit jeweils einem der vorderen oder hinteren Enden der ersten Abschnitte des ersten oder des zweiten Schaltkonsolenelements unmittelbar verbunden sind.

Der Fachmann versteht, dass die Kolbenstangenanordnungen beispielsweise eine Kolbenstange (Pleuel) und einen Kolben umfassen. Ferner ist insbesondere eine Kolbenkammer zwischen Gehäuse und Kolbenstangenanordnung angeordnet, welche dazu ausgebildet ist, das Medium aufzunehmen. Bevorzugt sind in dem Kreislauf die beiden Kolbenkammern der beiden Zylinderelemente direkt angrenzend an das Leitelement angeordnet, wobei das Medium bevorzugt ausschließlich in den beiden Kolbenkammern und im Leitelement aufgenommen ist. Ferner ist bevorzugt innerhalb des Leitelements ein Schlitten angeordnet, welcher gegenüber dem Medium abgedichtet ist und mit welchem der erste Abschnitt eines der Schaltkonsolenelemente, welches nicht mit den Kolbenstangenanordnungen unmittelbar verbunden ist, verbunden ist. Bevorzugt teilt der Schlitten den Raum, in welchem das Medium aufgenommen ist, in zwei beispielsweise identisch große Raumanteile auf. Bevorzugt herrscht in beiden Raumanteilen eine gleiche Vorspannung des Mediums (Systemdruck).

Vorteile und Zweckmäßigkeiten sind der nachfolgenden Beschreibung in Verbindung mit der Zeichnung zu entnehmen.

Es zeigen:
- Fig. 1: eine perspektivische Ansicht eines erfindungsgemäßen Fahrzeugsitzes;
- Fig. 2a-2c: verschiedene Ansichten eines Sitzteils des Fahrzeugsitzes gemäß Fig. 1 mit Teilen zweier Schaltkonsolenelemente;
- Fig. 3a-3f: verschiedene Ansichten des Sitzunterbaus des Sitzteils gemäß den Figuren 2a-2c mit dem Führungsschienenelement und dem Schlittenelement des Schaltkonsolenelements;
- Fig. 4: eine perspektivische Ansicht des Schaltkonsolenelements mit der ersten Welle;
- Fig. 5a, 5b: verschiedene Ansichten der Arretiervorrichtung zwischen dem Führungsschienenelement und dem Schlittenelement des Schaltkonsolenelements;
- Fig. 6a, 6b: schematisch dargestellt rein mechanische Lösungen des Übertragungssystems;
- Fig. 7: schematisch dargestellt eine pneumatische oder hydraulische Lösung des Übertragungssystems.

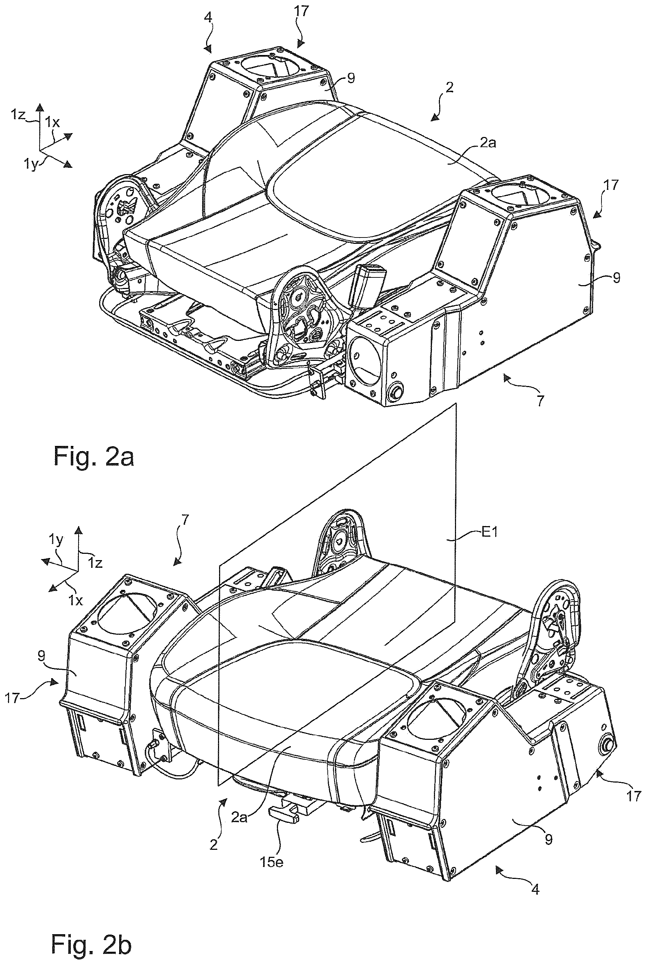

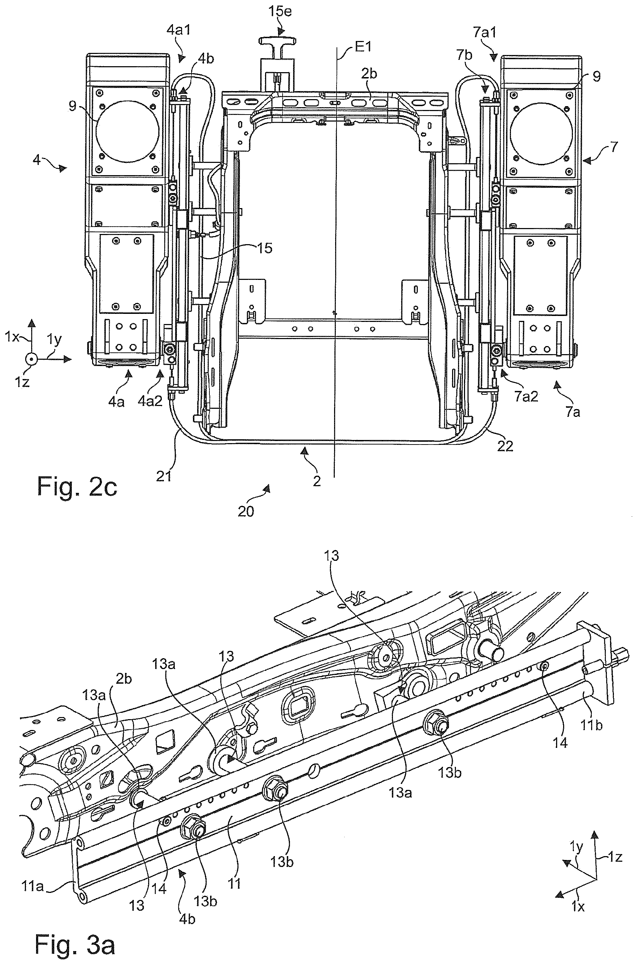

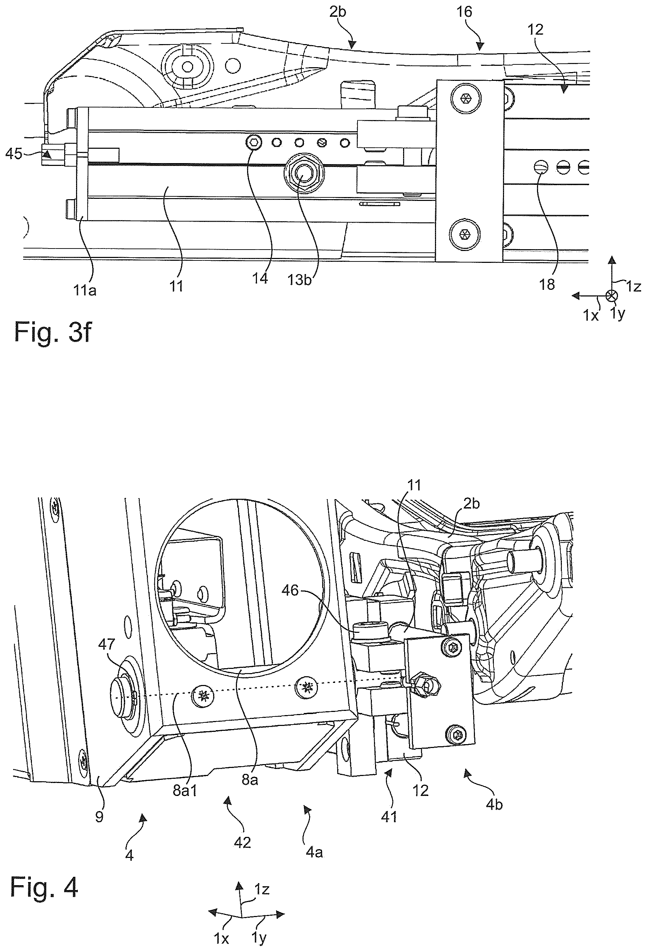

Es sei darauf hingewiesen, dass in den Figuren zum Teil Komponenten nicht dargestellt sind, um die Übersichtlichkeit zu gewähren. Beispielsweise zeigen die Figuren 2a-c kein Steuerhebelelement 5 und die Figuren 3a-f nur Teile des Schaltkonsolenelements 4.

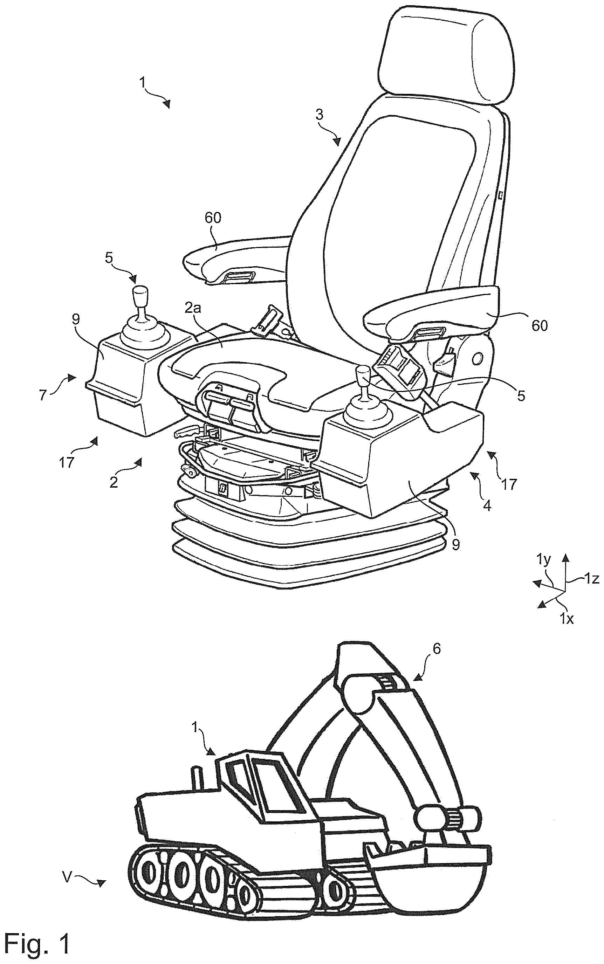

Die Figur 1 zeigt demnach einen Fahrzeugsitz 1 für ein in diesem Fall als Bagger dargestelltes Fahrzeug V mit einem Sitzteil 2 und mit einem Rückenlehnenteil 3, wobei das Sitzteil 2 und/ oder das Rückenlehnenteil 3 hinsichtlich eines Neigungsgrades verstellbar ausgebildet ist. Ferner sind in diesem Beispiel zwei Schaltkonsolenelemente 4, 7, aufweisend jeweils ein Steuerelement 5 in Form eines Joysticks zur Ansteuerung mindestens einer Funktion mindestens eines Aktorelements 6 (hier in Form eines Motors zur Bewegung eines Baggerschaufelarms des Fahrzeugs V) am Fahrzeugsitz 1 angeordnet.

Gezeigt ist ferner in allen Figuren 1-7 ein Koordinatensystem mit der Längsrichtung 1x mit nach vorne weisender Pfeilspitze, der Breitenrichtung 1y mit nach rechts weisender Pfeilspitze sowie der Höhenrichtung 1z des Fahrzeugsitzes 1 mit nach oben weisender Pfeilspitze, jeweils aus Sicht eines nicht dargestellten Benutzers des Fahrzeugsitzes 1.

Das Sitzteil 2 umfasst vorliegend ein Sitzpolsterteil 2a und einen Sitzteilrahmen 2b. Eines 4 der Schaltkonsolenelemente 4, 7 ist am Sitzteilrahmen 2b (siehe Fig. 3a) und seitlich, in diesem Fall aus Sicht des nicht dargestellten Benutzers des Fahrzeugsitzes 1 links des Sitzteils 2 montiert. Das andere 7 der Schaltkonsolenelemente 4, 7 ist an einem Sitzteilrahmen 2b (siehe Fig. 3a) des Sitzteils 2 und seitlich, in diesem Fall aus Sicht des nicht dargestellten Benutzers des Fahrzeugsitzes 1 rechts des Sitzteils 2 montiert. Beide Schaltkonsolenelemente weisen eine in Bezug auf eine Verschiebung in Längsrichtung 1x identische Relativposition gegenüber dem Fahrzeugsitz 1 auf und sind insbesondere gemäß der Figuren 1, 2a, 2b, 2c, 6a, 6b und 7 in einer Grundstellung gezeigt.

Die nun folgende Beschreibung bezieht sich, wenn nicht anders angegeben, stets auf das links des Sitzteils 2 montierte Schaltkonsolenelement 4. Dem Fachmann ist selbstverständlich klar, dass die folgenden Merkmale und Beschreibungen analog auch für das rechts des Sitzteils 2 montierte Schaltkonsolenelement 7 gelten können.

Vorliegend ist eine Veränderung der Relativposition eines ersten Abschnitts 4a des ersten Schaltkonsolenelements 4 gegenüber dem Fahrzeugsitz 1 durchführbar, wobei mittels eines Übertragungssystems 10, welches frei von elektronischen Komponenten ist, die Veränderung der Relativposition des ersten Abschnitts 4a des ersten Schaltkonsolenelements 4 in eine Veränderung einer Relativposition eines ersten Abschnitts 7a des zweiten Schaltkonsolenelements 7 gegenüber dem Fahrzeugsitz 1 übertragbar ist. Vorliegend ist die Veränderung der Relativposition des ersten Abschnitts 4a des ersten Schaltkonsolenelements 4 gegenüber dem Fahrzeugsitz 1 in Längsrichtung 1x durchführbar.

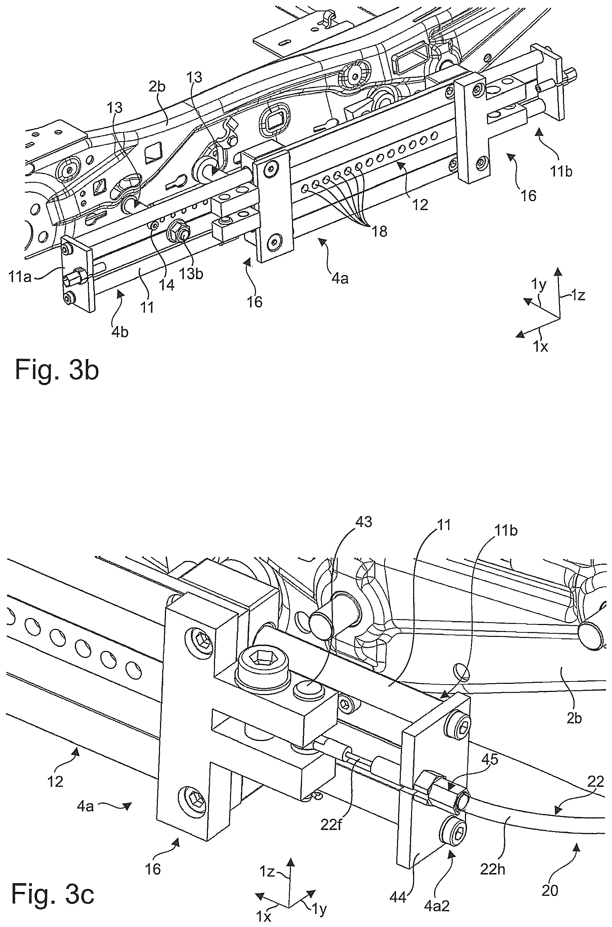

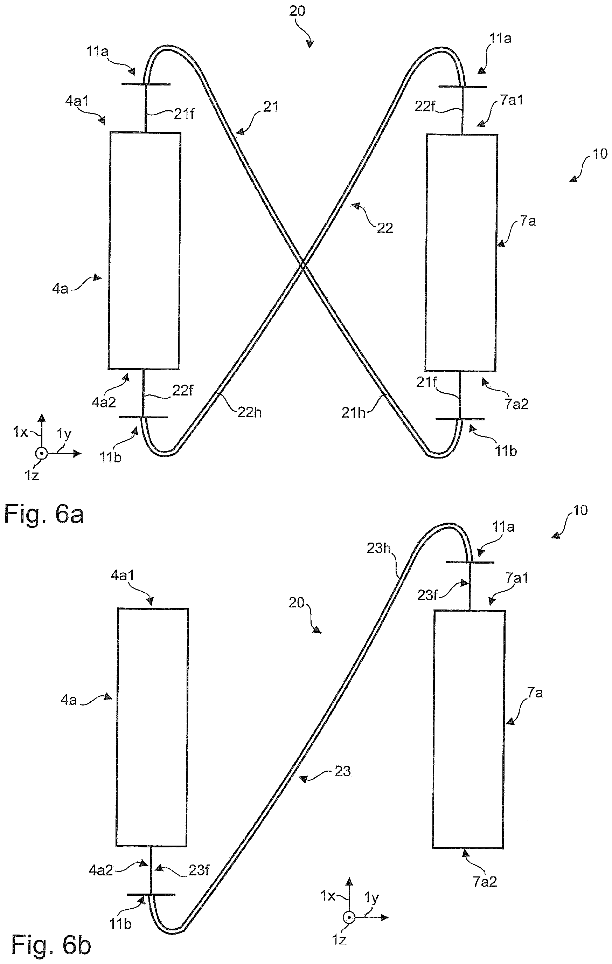

Die vorliegende Fig. 2c zeigt, dass nur das Schaltkonsolenelement 4 mit einer eigenen Arretierungsvorrichtung (siehe Beschreibung unten bezüglich des Rastbolzenelements 15) versehen ist. Ferner ist das Schaltkonsolenelement 7 mittels eines Übertragungssystems 20 (siehe insbesondere Fig. 3c und Fig. 6a) mit dem Schaltkonsolenelement 4 gekoppelt. Vorliegend ist das Übertragungssystem 20 geeignet, die oben beschriebene Verschiebebewegung und die Arretierung von dem einen Schaltkonsolenelement 4 auf das andere 7 zu übertragen.

Der gezeigte Fahrzeugsitz erlaubt es, dass die Veränderung der Relativposition des ersten Abschnitts 4a des ersten Schaltkonsolenelements 4 synchron zur Veränderung der Relativposition des ersten Abschnitts 7a des zweiten Schaltkonsolenelements 7 durchführbar ist, so dass die Relativposition des ersten Abschnitts 4a des ersten Schaltkonsolenelements 4 gegenüber dem Fahrzeugsitz 1 in Bezug auf eine in Längsrichtung 1x und Höhenrichtung 1z des Fahrzeugsitzes 1 verlaufende Bezugsebene E1 (siehe Fig. 2b und 2c) spiegelsymmetrisch zur Relativposition des ersten Abschnitts 7a des zweiten Schaltkonsolenelements 7 ausgestaltet ist. Beispielsweise ist die Bezugsebene E1 in Breitenrichtung 1y äquidistant zum ersten 4 und zum zweiten Schaltkonsolenelement 7 beabstandet.

Das erste Schaltkonsolenelement 4 und das zweite Schaltkonsolenelement 7 weisen vorliegend jeweils einen unmittelbar und starr mit dem Sitzteilrahmen 2b verbundenen zweiten Abschnitt 4b, 7b auf, gegenüber welchem der erste Abschnitt 4a, 7a jeweils zumindest in Längsrichtung 1x des Fahrzeugsitzes 1 verschiebbar ausgebildet ist, um die Veränderung der Relativposition der ersten Abschnitte 4a, 7a auszugestalten.

Außerdem ist vorliegend das Übertragungssystem 20 frei von elektronischen Komponenten und in diesem Beispiel ausschließlich mechanisch in Form eines Bowdenzugsystems ausgestaltet, wobei der erste Abschnitt 4a, 7a des ersten 4 und des zweiten Schaltkonsolenelements 7 jeweils ein vorderes 4a1, 7a1 und ein hinteres Ende 4a2, 7a2 umfasst, wovon mindestens zwei unmittelbar mit dem Bowdenzugsystem 20 verbunden sind. Gemäß der Ausführungsform von Fig. 6a sind alle vier Enden 4a1, 7a1, 4a2, 7a2 mit dem Bowdenzugsystem 20 verbunden. Gemäß der Ausführungsform von Fig. 6b sind lediglich zwei 4a2, 7a1 der vier Enden 4a1, 7a1, 4a2, 7a2 mit dem Bowdenzugsystem 20 verbunden.

Das Bowdenzugsystem umfasst in dem Beispiel von Fig. 6a ein erstes Bowdenzugelement 21, welcher jeweils unmittelbar mit dem vorderen Ende 4a1 des ersten Abschnitts 4a des ersten Schaltkonsolenelements 4 und mit dem hinteren Ende 7a2 des ersten Abschnitts 7a des zweiten Schaltkonsolenelements 7 verbunden ist, und ein zweites Bowdenzugelement 22, welches jeweils unmittelbar mit dem vorderen Ende 7a1 des ersten Abschnitts 7a des zweiten Schaltkonsolenelements 7 und mit dem hinteren Ende 4a2 des ersten Abschnitts 4a des ersten Schaltkonsolenelements 4 verbunden ist (siehe hierzu auch Fig. 2c). Damit die ersten Anteile 4a, 7a der Schaltkonsolenelemente 4, 7 miteinander und synchron verschoben werden können, sind diese mit den zwei Bowdenzugelementen 21, 22 überkreuz verbunden.

Fig. 6b zeigt schematisch eine zweite Variante der ersten Ausführungsform des Übertragungssystems, wonach das Bowdenzugsystem 20 ein einziges auf Zug und Druck belastbares Bowdenzugelement 23 umfasst, welches unmittelbar mit einem 7a1 der vorderen Enden 4a1, 7a1 und mit einem 4a2 der hinteren Enden 4a2, 7a2 der ersten Abschnitte 4a, 7a der Schaltkonsolenelemente 4, 7 verbunden ist.

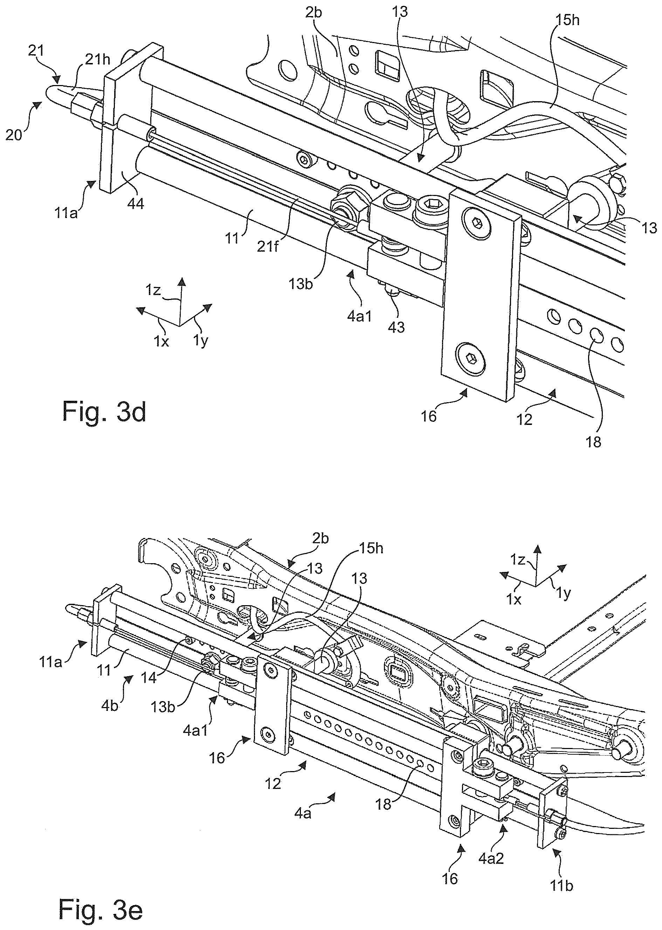

Die Enden der Seelen 21f, 22f der Bowdenzugelemente 21, 22 werden mit einem Stift 43 an den Haltern 16 für den Steuerhebelträger 17 bzw. für das Gehäuse 9 befestigt. In den Haltern 16 sitzen Inserts zur Positionierung der Bowdenzugelemente 21, 22. Als Gegenhalter der Bowdenzugelemente 21, 22 sind an den Enden 11a, 11b der Führungsschiene 11 Bleche 44 montiert, in welchen eine Stellschraube 45 zum Spannen der Bowdenzugelemente 21, 22 und zum Ausrichten der Steuerhebelträger 17 verschraubt ist (hierbei zeigen beispielsweise die Fig. 3d und 3e eine auf einen Minimalwert eingestellte Spannung der Bowdenzugelemente).

Denkbar ist, dass das einzige Bowdenzugelement 23 identisch zu den Bowdenzugelementen 21, 22 gegenüber den Haltern 16 und Führungsschienen 11 gelagert und befestigt ist.

Insbesondere gemäß den Fig. 6a und 6b ist ebenfalls schematisch gezeigt, dass der zweite Abschnitt 4b, 7b des ersten 4 und des zweiten Schaltkonsolenelements 7 jeweils ein vorderes 4b1, 7b1 und ein hinteres Ende 4b2, 7b2 umfasst, wobei die Bowdenzugelemente 21, 22; 23 jeweils eine stationäre Hülle 21h, 22h; 23h aufweisen, welche mit jeweils zwei der vorderen 4b1, 7b1 und hinteren Enden 4b2, 7b2 der zweiten Abschnitte 4b, 7b des ersten 4 und/ oder des zweiten Schaltkonsolenelements 7 verbunden ist. In diesem Fall ist beispielsweise die stationäre Hülle 21h des ersten Bowdenzugelements 21 mit dem vorderen Ende 11a der Gleitschiene 11 des zweiten Abschnitts 4b des ersten Schaltkonsolenelements 4 und mit dem hinteren Ende 11b der Gleitschiene 11 des zweiten Anteils 7b des zweiten Schaltkonsolenelements 7 verbunden.

Ebenfalls ist gezeigt, dass die Bowdenzugelemente 21, 22; 23 jeweils eine bewegliche Seele 21f, 22f; 23f aufweisen, welche mit jeweils zwei der vorderen 4a1, 7a1 und hinteren Enden 4a2, 7a2 der ersten Abschnitte 4a, 7a des ersten 4 und des zweiten Schaltkonsolenelements 7 verbunden ist. In diesem Fall ist beispielsweise die bewegliche Seele 21f des ersten Bowdenzugelements 21 mit dem vorderen Ende 4a1 des ersten Abschnitts 4a des ersten Schaltkonsolenelements 4 und mit dem hinteren Ende 7b1 des ersten Abschnitts 7a des zweiten Schaltkonsolenelements 7 verbunden.

Das Schaltkonsolenelement 4 umfasst einen Steuerhebelträger mit einem Gehäuse 9, welches insbesondere zur Lagerung des Steuerhebelelements 5 sowie zum Schutz von Signalleitungen zum Steuerhebelelement hin dient.

Die Fig. 3b zeigt beispielsweise den ersten Abschnitt 4a des Schaltkonsolenelements 4, welcher zumindest in Längsrichtung 1x des Fahrzeugsitzes 1 verschiebbar ausgebildet ist.

Gezeigt ist, dass der Fahrzeugsitz 1 in diesem Beispiel zwei Armlehnen 60 umfasst. In diesem Fall ist das Steuerkonsolenelement 4 unabhängig von beiden Armlehnen 60 ausgebildet. Das Steuerkonsolenelement 4 bildet vorliegend keinerlei mechanische Wechselwirkung mit der Armlehne 60 aus. Ferner ist eine Bewegung (Verschiebung und/ oder Verschwenkung) des Steuerkonsolenelements 4 unabhängig von einer Bewegung (Verschiebung und/ oder Verschwenkung) der Armlehne 60 durchführbar; es gilt dies vorliegend auch umgekehrt.

Die Fig. 3a zeigt nur einen zweiten Abschnitt 4b des Schaltkonsolenelements 4, nicht aber den ersten Abschnitt 4a. Gezeigt ist, dass das Schaltkonsolenelement 4 den unmittelbar und starr mit dem Sitzteilrahmen 2b verbundenen zweiten Abschnitt 4b aufweist. Diesem gegenüber ist der erste Abschnitt 4a in Längsrichtung 1x des Fahrzeugsitzes 1 mittels einer Verschiebebewegung verschiebbar ausgebildet.

Vorliegend ist also gewährleistet, dass zumindest der zweite Abschnitt 4b durch die starre Verbindung mit dem Sitzteilrahmen 2b stets der Verschwenkung des Sitzteils 2 folgt. Wie weiter unten noch erläutert wird, ist es jedoch bevorzugt, dass das Schaltkonsolenelement 4 zumindest abschnittsweise, insbesondere nämlich ein Anteil 42 des ersten Abschnitts 4a des Schaltkonsolenelements 4, hinsichtlich eines Neigungsgrades nochmals unabhängig vom Sitzteil 2 verstellbar ist.

Insbesondere die Fig. 3b zeigt, dass der zweite Abschnitt 4b des Schaltkonsolenelements 4 ein Führungsschienenelement 11 und der erste Abschnitt 4a des Schaltkonsolenelements 4 ein zum Führungsschienenelement 11 mittels der Verschiebebewegung relativbewegliches Schlittenelement 12 umfasst. In diesem Beispiel sind das Führungsschienenelement 11 und das Schlittenelement 12 zueinander gleitgelagert.

Vorliegend sind das Führungsschienenelement 11 und das Schlittenelement 12 hinsichtlich ihrer Längsausdehnung sich in Längs- 1x und Höhenrichtung 1z des Fahrzeugsitzes 1 erstreckend angeordnet. Ferner sind das Führungsschienenelement 11 und das Schlittenelement 12 hinsichtlich ihrer Längsausdehnung jeweils parallel zur Längsrichtung 1x des Fahrzeugsitzes 1 angeordnet.

Um die starre Verbindung zwischen dem Sitzteilrahmen 2b und dem zweiten Abschnitt 4b des Schaltkonsolenelements 4 auszubilden, umfasst der zweite Abschnitt 4b des Schaltkonsolenelements 4 vorliegend drei Abstandsbolzen 13, welche jeweils mit einem ersten Ende 13a starr mit dem Sitzteilrahmen 2b und mit einem zweiten Ende 13b lösbar mit dem Führungsschienenelement 11 verbunden sind (siehe insbesondere Fig. 3a). Vorliegend ist das Führungsschienenelement auf die Abstandsbolzen gesteckt und mittels je einer Bundmutter befestigt.

Am Schlittenelement 12 sind vorliegend je zwei Halter 16 für den Steuerhebelträger 17 bzw. für das Gehäuse 9 montiert.

Ferner zeigt die Fig. 3a, dass an einem ersten und in Längsrichtung 1x vorderen Ende 11a und einem zweiten und in Längsrichtung 1x hinteren Ende 11b des Führungsschienenelements 11 jeweils ein mechanisches Anschlagelement 14 angeordnet ist, welches dafür vorgesehen ist, bei der Verschiebebewegung des Schlittenelements 12 gegenüber dem Führungsschienenelement 11 mit dem Schlittenelement 12 eine mechanische Wechselwirkung auszubilden.

Vorliegend ist das Anschlagelement 14 lösbar mit dem ersten Ende 11a und dem zweiten Ende 11b des Führungsschienenelements 11 verbunden. Vorliegend sind zur Anordnung des Anschlagelements 14, welches vorliegend als Schraube ausgestaltet ist, am ersten 11a und am zweiten Ende 11b des Führungsschienenelements 11 jeweils mehrere Verbindungselemente in Form von Aufnahmebohrungen angeordnet.

Gemäß der Fig. 4 ist gezeigt, dass der erste Abschnitt 4a des Schaltkonsolenelements 4 einen in Sitzbreitenrichtung 1y innen liegenden Anteil 41, an welchem eine erste Welle 8a gelagert ist, und den um die erste Welle 8a verschwenkbaren in Sitzbreitenrichtung 1y außen liegenden Anteil 42 aufweist. Die Mittelachse 8a1 der ersten Welle 8a ist vorliegend parallel zur Sitzbreitenrichtung 1y angeordnet. Weiterhin ist die erste Welle 8a an einem hinteren Ende des Schaltkonsolenelements 4 angeordnet und gegenüber dem innen liegenden Anteil 41 mittels einer Klemmschraube 46 radial sowie gegenüber dem Gehäuse 9 mittels zweier Außensicherungsringen 47 (nur einer gezeigt) axial gesichert.

Vorliegend ist am vorderen Ende des Schaltkonsolenelements 4 eine zweite Welle (nicht gezeigt) als Teil der Lagerung des vorderen Endes des Schaltkonsolenelements 4 angeordnet, deren Lagerung gegenüber dem innen liegenden Anteil 41 und/ oder dem Gehäuse 9 beispielsweise identisch zur Lagerung der ersten Welle 8a ausgestaltet ist. Ferner ist am vorderen Ende des Schaltkonsolenelements 4 ein Halteelement (nicht gezeigt) angeordnet, welches eine Haltekraft bereitstellt, mittels welcher das Schaltkonsolenelement 4 hinsichtlich einer Verschwenkung um die erste Welle 8a in Position haltbar ist.

Der Neigungsgrad des zweiten Abschnitts 4b sowie des Anteils 41 des ersten Abschnitts 4a ist also lediglich von einem Neigungsgrad des Sitzteils 2 abhängig. Der Neigungsgrad des Anteils 42 des ersten Abschnitts 4a ist ferner zum einen vom Neigungsgrad des Sitzteils 2 und zum anderen von einem Verschwenkungsgrad des Anteils 42 um den Anteil 41 abhängig.

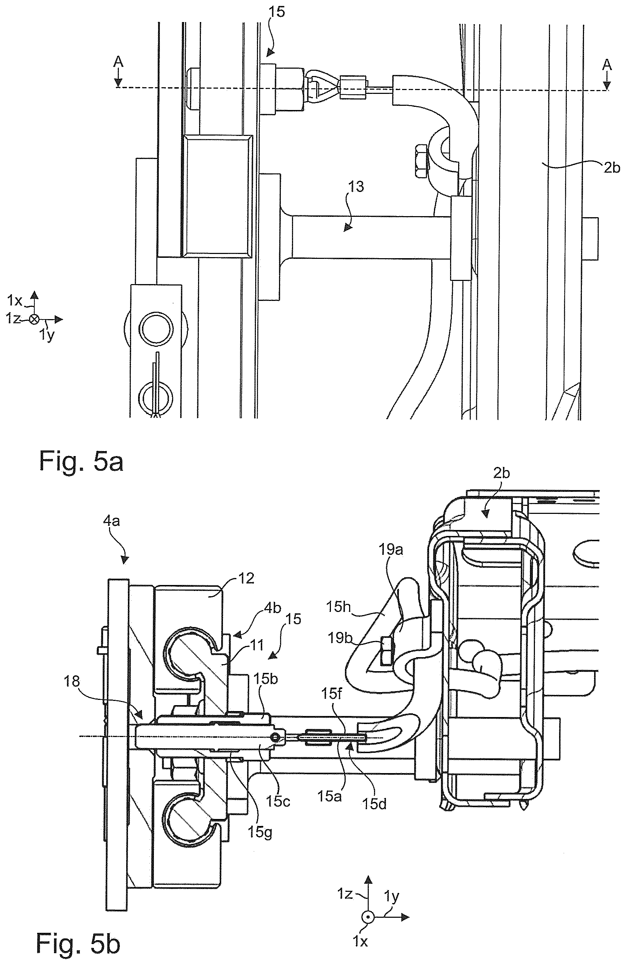

Aus den Figuren 5a und 5b geht hervor, dass vorliegend die Verschiebebewegung des Schlittenelements 12 gegenüber dem Führungsschienenelement 11 sperrbar ist. Die Fig. 5b zeigt dabei eine Querschnittsdarstellung entlang der Linie A-A aus Fig. 5a. Gezeigt ist, dass am Führungsschienenelement 11 ein mechanisches Sicherungselement 15 angeordnet ist, welches in Eingriff mit dem Schlittenelement 12 bringbar ist und dazu ausgebildet ist, die Verschiebebewegung des Schlittenelements 12 gegenüber dem Führungsschienenelement 11 zu sperren.

Vorliegend ist dieses Sicherungselement 15' als Rastbolzenelement 15 ausgestaltet. Dieses ist in Bezug auf seine Mittelachse 15a senkrecht zum Führungsschienenelement 11 in einer zu ihm komplementären Aussparung angeordnet. Das Rastbolzenelement 15 weist bevorzugt ein äußeres Hülsenelement 15b auf, welches gegenüber dem Führungsschienenelement 11 zumindest keine translatorischen Freiheitsgrade aufweist, mit anderen Worten ist es also, vorliegend in Richtung der Mittelachse 15a des Rastbolzenelements 15, nicht verschieblich gegenüber dem Führungsschienenelement 11b angeordnet. Innerhalb des äußeren Hülsenelements 15b ist ein Rastbolzen 15c in Richtung der Mittelachse 15a des Rastbolzenelements 15 verschieblich gelagert.

Während das äußere Hülsenelement 15b keine mechanische Wechselwirkung mit dem Schlittenelement 12 aufweist, ist mittels einer Verschiebung des Rastbolzens 15c in Richtung der Mittelachse 15a des Rastbolzenelements 15 hin zum Schlittenelement 12 eine mechanische Wechselwirkung zwischen dem Rastbolzen 15c und dem Schlittenelement 12 ausbildbar. Vorliegend ist der Rastbolzen 15c in eine von einer Vielzahl an Bohrungen 18 (siehe Fig. 3b, gemäß der einige der Bohrungen referenziert sind) am Schlittenelement 12 einführbar. Vorliegend sind die Bohrungen 18 in Längsrichtung des Schlittenelements 12 angeordnet, wobei zwei benachbarte Bohrungen jeweils identisch zueinander beabstandet sind.

Eine Verschiebung des Rastbolzens 15c innerhalb des Hülsenelements 15b ist vorliegend ausbildbar, indem ein dem Schlittenelement 12 abgewandtes Ende des Rastbolzens 15c mit einem Bowdenzugelement 15d verbunden ist. Ferner ist ein mittels eines Benutzers des Fahrzeugsitzes 1 bedienbarer Hebel 15e (siehe insbesondere Fig. 2b und 2c) am Fahrzeugsitz 1 angeordnet, welcher über das Bowdenzugelement 15d mit dem Rastbolzen 15c verbunden ist.

Verschwenkt oder verschiebt der Benutzer den Hebel 15e in eine erste Richtung (vorliegend in Sitzlängsrichtung 1x nach vorne), so ist eine Seele 15f des Bowdenzugelements 15d, welche insbesondere als ein Drahtseil ausgestaltet ist, auf Zug belastet, und der Rastbolzen 15c gleitet aus einer Bohrung 18 am Schlittenelement 12 heraus. Anschließend kann die Verschiebung des Schlittenelements 12 gegenüber dem Führungsschienenelement 11 erfolgen.

Verschwenkt oder verschiebt der Benutzer den Hebel 15e in eine zweite Richtung (vorliegend in Sitzlängsrichtung 1x nach hinten), so ist die Seele 15f auf Druck belastet, und der Rastbolzen 15c kann in eine andere Bohrung 18 am Schlittenelement 12 hineingleiten. Vorliegend ist am Hebel 15e ein nicht gezeigtes Verstellelement in Form einer Stellschraube angeordnet, mittels welchem eine Vorspannung der Seele 15f veränderbar ist.

Zusätzlich wäre es denkbar, dass der Rastbolzen 15c gegenüber der äußeren Hülse 15b federgelagert ist, wobei eine Kraft einer beispielsweise in dem Hohlraum 15g zwischen der Außenfläche des Rastbolzens 15c und der Innenfläche der äußeren Hülse 15b gelagerten Feder (nicht gezeigt) der Federlagerung auf den Rastbolzen 15c in Richtung des Schlittenelements 12 wirkt.

Eine äußere Hülle 15h des Bowdenzugelements 15d, innerhalb welcher die Seele 15f des Bowdenzugelements 15d verschieblich gelagert ist, ist vorteilhaft am Sitzunterbau 2b befestigt, beispielsweise mittels eines Halteblechs 19a und einer Klemmschraube 19b, so dass die Position der äußeren Hülle 15h gegenüber dem Sitzunterbau 2b fest ist.

Fig. 7 zeigt eine zweite Ausführungsform des Übertragungssystems, gemäß welcher das Übertragungssystem 10 hydraulisch ausgestaltet ist und ein Zylindersystem 30 ausbildet, wobei der erste Abschnitt 4a, 7a des ersten 4 und des zweiten Schaltkonsolenelements 7 jeweils mit dem Zylindersystem 30 verbunden sind.

Es ist gezeigt, dass das Zylindersystem 30 ein erstes Zylinderelement 31, welches unmittelbar mit dem vorderen Ende 4a1 des ersten Abschnitts 4a des ersten Schaltkonsolenelements 4 und über ein Leitelement 50 mit dem ersten Abschnitt 7a des zweiten Schaltkonsolenelements 7 verbunden ist, und ein zweites Zylinderelement 32, welches unmittelbar mit dem hinteren Ende 4a2 des ersten Abschnitts des Schaltkonsolenelements 4 und über Leitelemente 50 jeweils mit dem ersten Abschnitt des zweiten Schaltkonsolenelements 7 verbunden ist, umfasst. Die Verschaltung der Zylinderelemente 31, 32 verläuft also wie bei den Bowdenzugelementen 21, 22 überkreuz.

Es ist weiter gezeigt, dass der zweite Abschnitt 4b, 7b des ersten 4 und des zweiten Schaltkonsolenelements 7 jeweils ein vorderes 4b1, 7b1 und ein hinteres Ende 4b2, 7b2 umfasst, wobei die Zylinderelemente 31, 32 jeweils ein stationäres Gehäuse 31a, 32a und eine zum Gehäuse 31a, 32a relativbewegliche Kolbenstangenanordnung 31b, 32b umfassen. Die Kolbenstangenanordnungen 31b, 32b umfassen hier eine Kolbenstange und einen Kolben. Ferner sind Kolbenkammern 31c, 32c gezeigt, welche der Aufnahme eines Mediums 53 dienen.

Das Gehäuse 31a ist mit dem vorderen Ende 4b1 des zweiten Abschnitts 4b des ersten Schaltkonsolenelements 4 verbunden. Das Gehäuse 32a ist mit dem hinteren Ende 4b2 des zweiten Abschnitts 4b des ersten Schaltkonsolenelements 4 verbunden.

Die Kolbenstangenanordnung 31b ist mit dem vorderen Ende 4a1 des ersten Abschnitts 4a des ersten Schaltkonsolenelements 4 unmittelbar verbunden. Die Kolbenstangenanordnung 32b ist mit dem hinteren Ende 4a2 des ersten Abschnitts 4a des ersten Schaltkonsolenelements 4 unmittelbar verbunden.

Gleichzeitig ist hinsichtlich des verwendeten Mediums 53 (in diesem Fall ein Hydraulikmedium wie beispielsweise Öl) ein geschlossener Kreislauf ausgebildet, welcher vorliegend zwei mediumführende Abschnitte, die durch den Schlitten 52 getrennt sind, aufweist. Im Leitelement 50 wird das Medium 53 aufgenommen und transportiert. Innerhalb des Leitelements 50 und gegenüber dem Medium 53 abgedichtet ist ein Schlitten 52 verschiebbar angeordnet, an welchem der erste Abschnitt 7a des zweiten Schaltkonsolenelements 7 starr befestigt ist. Eine Hülse 51 kann wie gezeigt angeordnet sein, um das Leitelement 50 in Längsrichtung 1x zumindest abschnittsweise zu führen. Gleichzeitig ist denkbar, dass Aussparungen innerhalb einer Außenhülle des Leitelements 50 angeordnet sind, durch welche die Montagevorrichtungen von dem Schlitten 52 zum ersten Abschnitt 7a hindurchgeführt sind.

Eine Veränderung der Position des ersten Schaltkonsolenelements 4, hier in Form einer Verschiebung des ersten Schaltkonsolenelements 4 um eine Distanz 55 in Längsrichtung 1x des Fahrzeugsitzes 1 nach vorne, verschiebt die Kolbenstangenanordnung 31b ebenfalls in Längsrichtung 1x des Fahrzeugsitzes 1 nach vorne. Dadurch wird das Medium 53 aus der Kolbenkammer 31c in das Leitelement 50 verdrängt. Da das Medium 53 inkompressibel ist, wird der Druck entlang des Leitelements 50 weitergegeben und erreicht den Schlitten 52, welcher sich durch die Überkreuz-Verschaltung zusammen mit dem ersten Abschnitt 7a des zweiten Schaltkonsolenelements ebenfalls in Längsrichtung 1x des Fahrzeugsitzes 1 um die gleiche Distanz 55 nach vorne verschiebt. Bevorzugt ist der maximal mögliche Wert der Distanz 55 gleich groß wie oder kleiner als ein Maximal-Hub eines oder beider Zylinderelemente 31, 32.

### Bezugszeichenliste

- 1: Fahrzeugsitz
- 1x: Längsrichtung
- 1y: Breitenrichtung
- 1z: Höhenrichtung
- 2: Sitzteil
- 2a: Sitzfläche
- 2b: Sitzteilrahmen
- 3: Rückenlehnenteil
- 4, 7: Schaltkonsolenelement
- 4a, 7a: erster Abschnitt
- 4a1, 7a1: vorderes Ende
- 4a2, 7a2: hinteres Ende
- 4b: zweiter Abschnitt
- 5: Steuerelement
- 6: Aktorelement
- 8a: Welle
- 8a1: Mittelachse
- 9: Gehäuseelement
- 10: Übertragungssystem
- 11: Führungsschienenelement
- 11a, 11b: Ende
- 12: Schlittenelement
- 13: Abstandsbolzen
- 13a, 13b: Ende
- 14: Anschlagelement
- 15': Sicherungselement
- 15: Rastbolzenelement
- 15a: Mittelachse
- 15b: Hülsenelement
- 15c: Rastbolzen
- 15d, 21, 22, 23: Bowdenzugelement
- 15e: Hebel
- 15f, 21f, 22f, 23f: Seele
- 15g: Hohlraum
- 15h, 21h, 22h, 23h: Hülle
- 16: Halter
- 17: Steuerhebelträger
- 18: Bohrung
- 19a: Halteblech
- 19b: Klemmschraube
- 20: Bowdenzugsystem
- 30: Zylindersystem
- 31, 32: Zylinder
- 31a, 32a: Gehäuse
- 31b, 32b: Kolbenstangenanordnung
- 31c, 32c: Kolbenkammer
- 41, 42: Anteil
- 43: Stift
- 44: Blech
- 45: Stellschraube
- 46: Klemmschraube
- 50: Leitelement
- 51: Hülse
- 52: Schlitten
- 53: Medium
- 55: Distanz
- 60: Armlehne
- E1: Bezugsebene
- L, R: Seite
- V: Fahrzeug

## Patentansprüche

1. Fahrzeugsitz (1) für ein Fahrzeug (V) mit einem Sitzteil (2), umfassend einen Sitzteilrahmen (2b), mit einem Rückenlehnenteil (3) und mit einem ersten (4) und einem zweiten Schaltkonsolenelement (7), welche jeweils mindestens ein Steuerelement (5) zur Ansteuerung mindestens einer Funktion eines Aktorelements (6) des Fahrzeugs (V) umfassen, wobei das erste Schaltkonsolenelement (4) auf einer ersten Seite (L) des Sitzteils (2) und das zweite Schaltkonsolenelement (7) auf einer zweiten Seite (R) des Sitzteils (2) sich in Längsrichtung (1x) des Fahrzeugsitzes (1) erstreckend angeordnet sind, wobei das Sitzteil (2) und/ oder das Rückenlehnenteil (3) hinsichtlich eines Neigungsgrades verstellbar ausgebildet ist,
**dadurch gekennzeichnet, dass**
eine Veränderung einer Relativposition eines ersten Abschnitts (4a) des ersten Schaltkonsolenelements (4) gegenüber dem Fahrzeugsitz (1) durchführbar ist, wobei mittels eines Übertragungssystems (10), welches frei von elektronischen Komponenten ist, die Veränderung der Relativposition des ersten Abschnitts (4a) des ersten Schaltkonsolenelements (4) in eine Veränderung einer Relativposition eines ersten Abschnitts (7a) des zweiten Schaltkonsolenelements (7) gegenüber dem Fahrzeugsitz (1) übertragbar ist.

2. Fahrzeugsitz (1) nach Anspruch 1,
**dadurch gekennzeichnet, dass**
die Veränderung der Relativposition des ersten Abschnitts (4a) des ersten Schaltkonsolenelements (4) gegenüber dem Fahrzeugsitz (1) in Längsrichtung (1x) durchführbar ist.

3. Fahrzeugsitz (1) nach Anspruch 1 oder 2,
**dadurch gekennzeichnet, dass**
die Veränderung der Relativposition des ersten Abschnitts (4a) des ersten Schaltkonsolenelements (4) synchron zur Veränderung der Relativposition des ersten Abschnitts (7a) des zweiten Schaltkonsolenelements (7) durchführbar ist, so dass insbesondere die Relativposition des ersten Abschnitts (4a) des ersten Schaltkonsolenelements (4) gegenüber dem Fahrzeugsitz (1) in Bezug auf eine in Längsrichtung (1x) und Höhenrichtung (1z) des Fahrzeugsitzes (1) verlaufende Bezugsebene (E1) spiegelsymmetrisch zur Relativposition des ersten Abschnitts (7a) des zweiten Schaltkonsolenelements (7) ausgestaltet ist.

4. Fahrzeugsitz (1) nach einem der vorhergehenden Ansprüche,
**dadurch gekennzeichnet, dass**
das erste (4) und das zweite Schaltkonsolenelement (7) jeweils einen unmittelbar und starr mit dem Sitzteilrahmen (2b) verbundenen zweiten Abschnitt (4b, 7b) aufweisen, gegenüber welchem der erste Abschnitt (4a, 7a) jeweils zumindest in Längsrichtung (1x) des Fahrzeugsitzes (1) verschiebbar ausgebildet ist, um die Veränderung der Relativposition der ersten Abschnitte (4a, 7a) auszugestalten.

5. Fahrzeugsitz (1) nach einem der vorhergehenden Ansprüche,
**dadurch gekennzeichnet, dass**
das Übertragungssystem (10) rein mechanisch ausgestaltet ist und ein Bowdenzugsystem (20) ausbildet, wobei der erste Abschnitt (4a, 7a) des ersten (4) und des zweiten Schaltkonsolenelements (7) jeweils ein vorderes (4a1, 7a1) und ein hinteres Ende (4a2, 7a2) umfasst, wovon mindestens zwei unmittelbar mit dem Bowdenzugsystem (20) verbunden sind.

6. Fahrzeugsitz (1) nach Anspruch 4,
**dadurch gekennzeichnet, dass**
das Bowdenzugsystem (20) einen erstes Bowdenzugelement (21), welches jeweils unmittelbar mit dem vorderen Ende (4a1) des ersten Abschnitts (4a) des ersten Schaltkonsolenelements (4) und mit dem hinteren Ende (7a2) des ersten Abschnitts (7a) des zweiten Schaltkonsolenelements (7) verbunden ist, und einen zweites Bowdenzugelement (22), welches jeweils unmittelbar mit dem vorderen Ende (7a1) des ersten Abschnitts (7a) des zweiten Schaltkonsolenelements (7) und mit dem hinteren Ende (4a2) des ersten Abschnitts (4a) des ersten Schaltkonsolenelements (4) verbunden ist, umfasst.

7. Fahrzeugsitz (1) nach Anspruch 4,
**dadurch gekennzeichnet, dass**
das Bowdenzugsystem (20) ein einziges auf Zug und Druck belastbares drittes Bowdenzugelement (23) umfasst, welches unmittelbar mit einem der vorderen Enden (4a1, 7a1) und unmittelbar mit einem der hinteren Enden (4a2, 7a2) der ersten Abschnitte (4a, 7a) der Schaltkonsolenelemente (4, 7) verbunden ist.

8. Fahrzeugsitz (1) nach einem der Ansprüche 5-7,
**dadurch gekennzeichnet, dass**
der zweite Abschnitt (4b, 7b) des ersten (4) und des zweiten Schaltkonsolenelements (7) jeweils ein vorderes (4b1, 7b1) und ein hinteres Ende (4b2, 7b2) umfasst,
wobei die Bowdenzugelemente (21, 22; 23) jeweils eine stationäre Hülle (21h, 22h; 23h) aufweisen, welche mit jeweils zwei der vorderen (4b1, 7b1) und hinteren Enden (4b2, 7b2) der zweiten Abschnitte (4b, 7b) der ersten (4) und des zweiten Schaltkonsolenelements (7) verbunden ist, und
wobei die Bowdenzugelemente (21, 22; 23) jeweils eine bewegliche Seele (21f, 22f; 23f) aufweisen, welche mit jeweils zwei der vorderen (4a1, 7a1) und hinteren Enden (4a2, 7a2) der ersten Abschnitte (4a, 7a) des ersten (4) und des zweiten Schaltkonsolenelements (7) verbunden ist.

9. Fahrzeugsitz (1) nach einem der Ansprüche 1-3,
**dadurch gekennzeichnet, dass**
das Übertragungssystem (10) zumindest teilweise pneumatisch und/ oder hydraulisch ausgestaltet ist und ein Zylindersystem (30) ausbildet, wobei der erste Abschnitt (4a, 7a) des ersten (4) und des zweiten Schaltkonsolenelements (7) jeweils mit dem Zylindersystem (30) verbunden sind.

10. Fahrzeugsitz (1) nach Anspruch 7,
**dadurch gekennzeichnet, dass**
das Zylindersystem (30) ein erstes Zylinderelement (31), welches unmittelbar mit dem vorderen Ende (4a1) des ersten Schaltkonsolenelements (4) und über mindestens ein Leitelement (50) mit dem hinteren Ende (7a2) des zweiten Schaltkonsolenelements (7) verbunden ist, und ein zweites Zylinderelement (32), welches unmittelbar mit dem hinteren Ende (4a2) des ersten Schaltkonsolenelements (4) und über das mindestens eine Leitelement (50) mit dem vorderen Ende (7a1) des zweiten Schaltkonsolenelements (7) verbunden ist, umfasst.

11. Fahrzeugsitz (1) nach Anspruch 10,
**dadurch gekennzeichnet, dass**
der zweite Abschnitt (4b, 7b) des ersten (4) und des zweiten Schaltkonsolenelements (7) jeweils ein vorderes (4b1, 7b1) und ein hinteres Ende (4b2, 7b2) umfasst,
wobei die Zylinderelemente (31, 32) jeweils ein stationäres Gehäuse (31a, 32a) und eine zum Gehäuse (31a, 32a) relativbewegliche Kolbenstangenanordnung (31b, 32b) umfassen,
wobei die stationären Gehäuse (31a, 32a) mit jeweils einem der vorderen (4b1, 7b1) oder hinteren Enden (4b2, 7b2) der zweiten Abschnitte (4b, 7b) des ersten (4) oder des zweiten Schaltkonsolenelements (7), insbesondere unmittelbar, verbunden sind, und wobei die Kolbenstangenanordnungen (31b, 32b) mit jeweils einem der vorderen (4a1, 7a1) oder hinteren Enden (4a2, 7a2) der ersten Abschnitte (4a, 7a) des ersten (4) oder des zweiten Schaltkonsolenelements (7) unmittelbar verbunden sind.

## Claims

1. Vehicle seat (1) for a vehicle (V), comprising a seat part (2) that has a seat part frame (2b), comprising a backrest part (3) and comprising a first (4) and a second switching console element (7) which each comprise at least one control element (5) for actuating at least one function of an actuator element (6) of the vehicle (V), the first switching console element (4) being arranged on a first side (L) of the seat part (2) and the second switching console element (7) being arranged on a second side (R) of the seat part (2) so as to extend in the longitudinal direction (1x) of the vehicle seat (1), the seat part (2) and/or the backrest part (3) being designed so as to be adjustable with respect to a degree of inclination,
**characterised in that**
a relative position of a first portion (4a) of the first switching console element (4) with respect to the vehicle seat (1) can be changed, it being possible to transfer the change in the relative position of the first portion (4a) of the first switching console element (4)into a change in a relative position of a first portion (7a) of the second switching console element (7), with respect to the vehicle seat (1), by means of a transmission system (10) which is free of electronic components.

2. Vehicle seat (1) according to claim 1,
**characterised in that**
the change in the relative position of the first portion (4a) of the first switching console element (4), with respect to the vehicle seat (1), can be made in the longitudinal direction (1x).

3. Vehicle seat (1) according to either claim 1 or claim 2,
**characterised in that**
the change in the relative position of the first portion (4a) of the first switching console element (4) can be carried out synchronously with the change in the relative position of the first portion (7a) of the second switching console element (7), such that in particular the relative position of the first portion (4a) of the first switching console element (4) is mirror-symmetrical to the relative position of the first portion (7a) of the second switching console element (7), with respect to the vehicle seat (1), in relation to a reference plane (E1) that extends in the longitudinal direction (1x) and height direction (1z) of the vehicle seat (1).

4. Vehicle seat (1) according to any of the preceding claims,
**characterised in that**
the first (4) and the second switching console element (7) each comprise a second portion (4b, 7b) which is directly and rigidly connected to the seat part frame (2b) and relative to which the first portion (4a, 7a) is in each case designed to be displaceable, at least in the longitudinal direction (1x) of the vehicle seat (1), in order to bring about the change in the relative position of the first portions (4a, 7a).

5. Vehicle seat (1) according to any of the preceding claims,
**characterised in that**
the transmission system (10) is designed so as to be exclusively mechanical and forms a Bowden cable system (20), the first portion (4a, 7a) of the first (4) and of the second switching console element (7) each comprising a front (4a1, 7a1) and a rear end (4a2, 7a2), of which at least two are directly connected to the Bowden cable system (20).

6. Vehicle seat (1) according to claim 4,
**characterised in that**
the Bowden cable system (20) comprises a first Bowden cable element (21) which is directly connected to the front end (4a1) of the first portion (4a) of the first switching console element (4) and to the rear end (7a2) of the first portion (7a) of the second switching console element (7) in each case, and a second Bowden cable element (22) which is directly connected to the front end (7a1) of the first portion (7a) of the second switching console element (7) and to the rear end (4a2) of the first portion (4a) of the first switching console element (4) in each case.

7. Vehicle seat (1) according to claim 4,
**characterised in that**
the Bowden cable system (20) comprises a single Bowden cable element (23) which can be subjected to tensile and compressive stress and which is directly connected to one of the front ends (4a1, 7a1) and directly connected to one of the rear ends (4a2, 7a2) of the first portions (4a, 7a) of the switching console elements (4, 7).

8. Vehicle seat (1) according to any of claims 5-7,
**characterised in that**
the second portion (4b, 7b) of the first (4) and of the second switching console element (7) each comprise a front (4b1, 7b1) and a rear end (4b2, 7b2),
the Bowden cable elements (21, 22; 23) each comprising a stationary sheath (21h, 22h; 23h) which is connected to two of the front (4b1, 7b1) and rear ends (4b2, 7b2) of the second portions (4b, 7b) of the first (4) and of the second switching console element (7) in each case, and
the Bowden cable elements (21, 22; 23) each comprising a movable core (21f, 22f; 23f) which is connected to two of the front (4a1, 7a1) and rear ends (4a2, 7a2) of the first portions (4a, 7a) of the first (4) and of the second switching console element (7) in each case.

9. Vehicle seat (1) according to any of claims 1-3,
**characterised in that**
the transmission system (10) is pneumatic and/or hydraulic at least in part and forms a cylinder system (30), the first portion (4a, 7a) of the first (4) and of the second switching console element (7) each being connected to the cylinder system (30).

10. Vehicle seat (1) according to claim 7,
**characterised in that**
the cylinder system (30) comprises a first cylinder element (31) which is directly connected to the front end (4a1) of the first switching console element (4) and is connected to the rear end (7a2) of the second switching console element (7) by means of at least one conducting element (50), and comprises a second cylinder element (32) which is directly connected to the rear end (4a2) of the first switching console element (4) and is connected to the front end (7a1) of the second switching console element (7) by means of the at least one conducting element (50).

11. Vehicle seat (1) according to claim 10,
**characterised in that**
the second portion (4b, 7b) of the first (4) and of the second switching console element (7) each comprise a front (4b1, 7b1) and a rear end (4b2, 7b2),
the cylinder elements (31, 32) each comprising a stationary housing (31a, 32a) and a piston rod assembly (31b, 32b) which is movable relative to the housing (31a, 32a), the stationary housing (31a, 32a) being connected, in particular directly, to one of the front (4b1, 7b1) or rear ends (4b2, 7b2) of the second portions (4b, 7b) of the first (4) or of the second switching console element (7) in each case, and
the piston rod assemblies (31b, 32b) being directly connected to one of the front (4a1, 7a1) or rear ends (4a2, 7a2) of the first portions (4a, 7a) of the first (4) or of the second switching console element (7) in each case.

## Revendications

1. Siège de véhicule (1) pour un véhicule (V) avec une partie siège (2), comportant un cadre de partie siège (2b), avec une partie dossier (3) et avec un premier (4) et un second élément console de commutation (7), lesquels comportent chacun au moins un élément de commande (5) pour l'actionnement d'au moins une fonction d'un élément d'actionnement (6) du véhicule (V), le premier élément console de commutation (4) étant disposé sur un premier côté (L) de la partie siège (2) et le second élément console de commutation (7) étant disposé sur un second côté (R) de la partie siège (2) pour s'étendre dans la direction longitudinale (1x) du siège de véhicule (1), la partie siège (2) et/ou la partie dossier (3) étant réalisées ajustables en ce qui concerne un degré d'inclinaison,
**caractérisé par le fait qu'**
un changement d'une position relative d'une première partie (4a) du premier élément console de commutation (4) par rapport au siège de véhicule (1) est réalisable, le changement de la position relative de la première partie (4a) du premier élément console de commutation (4) étant transférable en un changement d'une position relative d'une première partie (7a) du second élément console de commutation (7) par rapport au siège de véhicule (1), au moyen d'un système de transmission (10) qui est exempt de composants électroniques.

2. Siège de véhicule (1) selon la revendication 1,
**caractérisé par le fait que**
le changement de la position relative de la première partie (4a) du premier élément console de commutation (4) par rapport au siège de véhicule (1) est réalisable dans la direction longitudinale (1x).

3. Siège de véhicule (1) selon l'une des revendications 1 ou 2,
**caractérisé par le fait que**
le changement de la position relative de la première partie (4a) du premier élément console de commutation (4) est réalisable de façon synchrone avec le changement de la position relative de la première partie (7a) du second élément console de commutation (7), de telle sorte qu'en particulier, la position relative de la première partie (4a) du premier élément console de commutation (4) par rapport au siège de véhicule (1) est symétrique dans un miroir à la position relative de la première partie (7a) du second élément console de commutation (7), par rapport à un plan de référence (E1) qui s'étend dans la direction longitudinale (1x) et dans la direction de la hauteur (1z) du siège de véhicule (1).

4. Siège de véhicule (1) selon l'une des revendications précédentes,
**caractérisé par le fait que**
le premier (4) et le second élément console de commutation (7) présentent chacun une seconde partie (4b, 7b) qui est reliée directement et rigidement avec le cadre de partie siège (2b) et par rapport à laquelle la première partie (4a, 7a) est dans chaque cas agencée pour être déplaçable au moins dans la direction longitudinale (1x) du siège de véhicule (1), de façon à provoquer le changement de la position relative des premières parties (4a, 7a).

5. Siège de véhicule (1) selon l'une des revendications précédentes,
**caractérisé par le fait que**
le système de transmission (10) est agencé de façon à être exclusivement mécanique et forme un système à câble Bowden (20), la première partie (4a, 7a) du premier (4) et du second élément console de commutation (7) comportant chacune une extrémité avant (4a1, 7a1) et une extrémité arrière (4a2, 7a2), dont au moins deux sont reliées directement avec le système à câble Bowden (20).

6. Siège de véhicule (1) selon la revendication 4,
**caractérisé par le fait que**
le système à câble Bowden (20) comporte un premier élément câble Bowden (21), lequel est relié dans chaque cas directement avec l'extrémité avant (4a1) de la première partie (4a) du premier élément console de commutation (4) et avec l'extrémité arrière (7a2) de la première partie (7a) du second élément console de commutation (7), et un deuxième élément câble Bowden (22), lequel est relié dans chaque cas directement avec l'extrémité avant (7a1) de la première partie (7a) du second élément console de commutation (7) et avec l'extrémité arrière (4a2) de la première partie (4a) du premier élément console de commutation (4).

7. Siège de véhicule (1) selon la revendication 4,
**caractérisé par le fait que**
le système à câble Bowden (20) comporte un troisième élément câble Bowden unique (23) qui peut être soumis à une contrainte de traction et de compression et qui est relié directement avec l'une des extrémités avant (4a1, 7a1) et directement avec l'une des extrémités arrière (4a2, 7a2) des premières parties (4a, 7a) des éléments consoles de commutation (4, 7).

8. Siège de véhicule (1) selon l'une des revendications 5 à 7,
**caractérisé par le fait que**
les secondes parties (4b, 7b) du premier élément console de commutation (4) et du second élément console de commutation (7) comportent chacune une extrémité avant (4b1, 7b1) et une extrémité arrière (4b2, 7b2),
les éléments câbles Bowden (21, 22 ; 23) comportant chacun une gaine stationnaire (21h, 22h ; 23h), laquelle est reliée avec dans chaque cas deux des extrémités avant (4b1, 7b1) et arrière (4b2, 7b2) des secondes parties (4b, 7b) du premier (4) et du second élément console de commutation (7), et
les éléments câbles Bowden (21, 22 ; 23) comportant chacun une âme mobile (21f, 22f ; 23f), laquelle est reliée avec dans chaque cas deux des extrémités avant (4a1, 7a1) et arrière (4a2, 7a2) des premières parties (4a, 7a) du premier (4) et du second élément console de commutation (7).

9. Siège de véhicule (1) selon l'une des revendications 1 à 3,
**caractérisé par le fait que**
le système de transmission (10) est conçu au moins en partie pneumatiquement et/ou hydrauliquement et forme un système de vérins (30), les premières parties (4a, 7a) du premier (4) et du second élément console de commutation (7) étant chacune reliées avec le système de vérins (30).

10. Siège de véhicule (1) selon la revendication 7,
**caractérisé par le fait que**
le système de vérins (30) comporte un premier élément vérin (31), lequel est relié directement avec l'extrémité avant (4a1) du premier élément console de commutation (4) et par l'intermédiaire d'au moins un élément de guidage (50) avec l'extrémité arrière (7a2) du second élément console de commutation (7), et un second élément vérin (32), lequel est relié directement avec l'extrémité arrière (4a2) du premier élément console de commutation (4) et par l'intermédiaire dudit au moins un élément de guidage (50) avec l'extrémité avant (7a1) du second élément console de commutation (7).

11. Siège de véhicule (1) selon la revendication 10,
**caractérisé par le fait que**
les secondes parties (4b, 7b) du premier (4) et du second élément console de commutation (7) comportent à chaque fois une extrémité avant (4b1, 7b1) et une extrémité arrière (4b2, 7b2),
les éléments vérins (31, 32) comportant à chaque fois un boîtier stationnaire (31a, 32a) et un dispositif de tiges de piston (31b, 32b) à mobilité relative par rapport au boîtier (31a, 32a),
les boîtiers stationnaires (31a, 32a) étant reliés avec à chaque fois l'une des extrémités avant (4b1, 7b1) ou arrière (4b2, 7b2) des secondes parties (4b, 7b) du premier (4) ou du second élément console de commutation (7), en particulier directement, et les dispositifs de tiges de piston (31b, 32b) étant reliés directement avec à chaque fois l'une des extrémités avant (4a1, 7a1) ou arrière (4a2, 7a2) des premières parties (4a, 7a) du premier (4) ou du second élément console de commutation (7).
